# EUROPÄISCHE PATENTSCHRIFT

(11) **EP 0 848 481 B1**
(45) Veröffentlichungstag und Bekanntmachung des Hinweises auf die Patenterteilung: **11.06.2003**
(21) Anmeldenummer: 97203787.3
(22) Anmeldetag: 03.12.1997
(51) Int. Cl.: H02K 26/00, H01F 7/14, H02K 1/14

(54) **Elektromotorische Verstellvorrichtung**
Adjusting device with electric motor
Dispositif d'ajustement avec moteur électrique

(30) Priorität: 13.12.1996 DE 19651920
(43) Veröffentlichungstag der Anmeldung: 17.06.1998
(73) Patentinhaber: Philips Intellectual Property & Standards GmbH, 20099 Hamburg (DE); Koninklijke Philips Electronics N.V., 5621 BA Eindhoven (NL)
(72) Erfinder: Ackermann, Bernd, Dr., Röntgenstrasse 24, 22335 Hamburg (DE); Schumacher, Axel, Dr.-Ing., Röntgenstrasse 24, 22335 Hamburg (DE)
(74) Vertreter: von Laue, Hanns-Ulrich, Dipl.-Ing.

(56) Entgegenhaltungen:
- DE-A- 2 147 663
- DE-A- 19 504 243
- PATENT ABSTRACTS OF JAPAN vol. 005, no. 171 (E-080), 30. Oktober 1981 & JP 56 098367 A (NAMIKI PRECISION JEWEL CO LTD), 7. August 1981

## Beschreibung

Die Erfindung bezieht sich auf eine elektromotorische Verstellvorrichtung mit einem Rotor, der einen magnetisierten Drehkörper aufweist, sowie mit einem U-förmigen Stator, dessen Schenkel die Polschuhe bilden und dessen Joch die beiden Schenkel verbindet, wobei die Winkelstellung des Rotors mittels des Statorstromes einstellbar ist.

Eine derartige Vorrichtung ist aus der DE 195 04 243 (PHD 95-010) bekannt. Bei dieser bekannten Verstellvorrichtung ist der U-förmige Stator einstückig aus einem hochpermeablen Werkstoff, wie Eisen, Stahl, Sintereisen oder isotropem Elektroblech ausgebildet. Er ist mittels einer einsträngigen Erregerwicklung elektrisch erregbar. Die Erregerwicklung ist auf dem Joch des Stators angeordnet. Diese bekannte Vorrichtung ist insbesondere dazu vorgesehen, eine Drosselklappe in der Ansaugleitung eines Verbrennungsmotors zu verstellen. Bei dieser Anwendung muß von der elektromotorischen Verstellvorrichtung infolge der Luftströmung in der Ansaugleitung über den Drehwinkelbereich des Rotors ein sich stark änderndes Drehmoment mit hohen Überlastmomenten aufgebracht werden. Auch infolge Vereisung oder Verschmutzung muß teilweise ein hohes Überlastmoment aufgebracht werden. Die bekannte Vorrichtung muß für den Betriebszustand, der den größten magnetischen Fluß erfordert, ausgelegt werden. Dies hat einen großen Querschnitt des Stators und damit ein hohes Gewicht zur Folge. Der erforderliche magnetische Fluß ist besonders groß, wenn eine weit geöffnete Drosselklappe bei großem Statorstrom noch weiter geöffnet werden soll oder wenn eine fast geschlossene Drosselklappe bei großem Statorstrom noch weiter geschlossen werden soll.
Der maximale Drehwinkelbereich des Rotors dieser bekannten Vorrichtung ist kleiner als 180°.

Es ist Aufgabe der Erfindung, eine elektromotorische Verstellvorrichtung der eingangs genannten Art zu schaffen, die bei kleinen Abmessungen und geringem Gewicht kurzzeitig sehr hohe Überlastmomente aufbringen kann und die fertigungstechnisch einfach hergestellt werden kann.

Diese Aufgabe ist erfindungsgemäß dadurch gelöst, daß der U-förmige Stator wenigstens drei Teilstücke aufweist, daß das erste Teilstück im wesentlichen das Joch des Stators bildet, daß das zweite und das dritte Teilstück im wesentlichen die Schenkel des Stators bilden und daß das erste Teilstück aus anisotropem Material besteht, dessen Vorzugsrichtung im wesentlichen auf die Richtung des magnetischen Flusses im Joch ausgerichtet ist.

Das Joch des Stators ist die kritischste Stelle für die Führung des magnetischen Flusses, da im Joch sowohl der von dem magnetisierten Drehkörper erzeugte magnetische Fluß als auch der von der Erregerwicklung des Stators errregte magnetische Fluß geführt werden muß.
Gemäß der Erfindung ist dieses kritischste Stück des Stators als erstes Teilstück aus anisotropem Material gebildet, dessen Vorzugsrichtung im wesentlichen auf die Richtung des magnetischen Flusses im Joch ausgerichtet ist. Mit einem derartigen anisotropen Material lassen sich im Joch des Stators bei gleichem Erregerstrom und gleichem Jochquerschnitt deutlich höhere magnetische Flußdichten erzielen als mit isotropem Material. Im Vergleich zu einem Joch aus isotropem Material kann der Querschnitt des Joches bei Verwendung von anisotropem Material deutlich reduziert werden. Damit ergibt sich eine wesentliche Volumen- und Gewichtsreduzierung.

Die beiden Schenkel des Stators sind als zweites und als drittes Teilstück ausgebildet. Diese dreiteilige Ausbildung des U-förmigen Stators ist fertigungstechnisch günstig. Insbesondere hat diese Konstruktion den weiteren Vorteil, daß die Erregerwicklung des Stators als separate Komponente gewickelt werden und zusammen mit den drei Teilstücken des Stators montiert werden kann.

Bei einer vorteilhaften Ausgestaltung der Erfindung ist vorgesehen, daß das zweite und das dritte Teilstück jeweils aus isotropem Material bestehen.

Das isotrope Material hat den Vorteil, daß es im Vergleich zu dem anisotropen Material kostengünstiger ist.

Gemäß einer anderen vorteilhaften Ausgestaltung der Erfindung ist vorgesehen, daß das zweite und das dritte Teilstück jeweils aus anisotropem Material bestehen, dessen Vorzugsrichtung jeweils in Richtung der Haupterstreckungsrichtung der Schenkel gerichtet ist.

Bei dieser Ausgestaltung der Erfindung stimmt die Vorzugsrichtung des anisotropen Materials der Schenkel an den für die Flußführung kritischen Stellen der Schenkel mit der Richtung des magnetischen Flusses überein. Die in den Schenkeln für die Flußführung kritischen Stellen sind der Verbindungsbereich zwischen dem Joch des Stators und den Schenkeln des Stators und der mittlere Bereich der von den Schenkeln gebildeten Polschuhe, in dem der Querschnitt der Schenkel am geringsten ist. Weitgehend unkritisch ist die Führung des magnetischen Flusses von den Schenkeln in Richtung auf den Rotor. In diesem Bereich ist der Querschnitt im wesentlichen durch den Durchmesser des Rotors bestimmt und in den meisten Fällen ausreichend groß.

Durch die Verwendung von anisotropem Material, dessen Vorzugsrichtung jeweils in Richtung der Haupterstreckungsrichtung der Schenkel gerichtet ist und somit an den kritischen Stellen der Flußführung mit der Richtung des magnetischen Flusses in den Schenkeln übereinstimmt, kann der Querschnitt an diesen kritischen Stellen im Vergleich zu Schenkeln aus isotropem Material kleiner gewählt werden. Dadurch wird die gesamte elektromotorische Verstellvorrichtung kompakter und leichter. Der magnetische Fluß verläuft in den Schenkeln nur an den kritischen Stellen in Richtung der Anisotropierichtung des Materials der Schenkel, während er an für die Flußführung nicht so kritischen Stellen sogar teilweise senkrecht zu der Anisotropierichtung des Schenkelmaterials verläuft. Damit ergibt sich eine guter Kompromiß zwischen fertigungstechnischer Einfachheit, kompakter und leichter Bauweise, und guten elektrodynamischen Eigenschaften der Verstellvorrichtung.

Bei einer weiteren vorteilhaften Ausgestaltung der Erfindung ist vorgesehen, daß die Polschuhe am Luftspalt Nuten aufweisen, in die dauermagnetische Magnetkörper eingesetzt sind, die für den Rotor einen Rückstellmechanismus bilden.

Für viele Anwendungsfälle ist es vorteilhaft, daß der Rotor bei Abschalten oder Ausfall des Statorstromes eine vorgebbare Position einnimmt. Das hierfür erforderliche Rückstellmoment kann auf einfache Art und Weise mittels der dauermagnetischen Magnetkörper erzeugt werden.

Eine weitere vorteilhafte Ausgestaltung der Erfindung ist dadurch gekennzeichnet, daß der Luftspalt zwischen dem Rotor und den Polschuhen des Stators in Umfangsrichtung ungleichmäßig breit ausgebildet ist, so daß sich ein Klebemoment ergibt, das auf den Rotor ein Rückstellmoment ausübt.

Bei stromloser Statorspule nimmt der Rotor dann automatisch eine Vorzugswinkelstellung ein, die der Winkelstellung des geringsten magnetischen Widerstandes für den Rotor entspricht. Eine derartige ungleichmäßige Ausgestaltung des Luftspaltes ist einfach und kostengünstig zu realisieren. Es sind weder aufwendige mechanische Rückstellmittel, z.B. Rückstellfedern, noch sonstige zusätzliche elektromagnetische Rückstellanordnungen erforderlich. Das erforderliche Rückstellmoment läßt sich sowohl ausschließlich mittels des ungleichmäßig breiten Luftspaltes realisieren als auch mittels einer Kombination von ungleichmäßig breitem Luftspalt und zusatzlichen dauermagnetischen Magnetkörpern.

Eine weitere vorteilhafte Ausgestaltung der Erfindung ist dadurch gekennzeichnet, daß die Trennflächen zwischen dem ersten und dem zweiten Teilstück und dem ersten und dem dritten Teilstück jeweils als Schrägen gegenüber der Haupterstreckungsrichtung des Joches mit einem Winkel zwischen 20° und 70° verlaufen.

Eine derartige Konstruktion weist eine mechanisch besonders hohe Stabilität auf.

Eine weitere vorteilhafte Ausgestaltung der Erfindung ist dadurch gekennzeichnet, daß das anisotrope Material kornorientiertes Elektroblech ist.

Eine weitere vorteilhafte Ausgestaltung der Erfindung ist dadurch gekennzeichnet, daß das erste und das zweite Teilstück und das erste und das dritte Teilstück mittels Formschlußzentrierungen aneinander gefügt sind.

Derartige Formschlußzentrierungen sind beispielsweise aus der DE 40 37 953 bekannt.

Die erfindungsgemäße elektromotorische Verstellvorrichtung läßt sich vorteilhaft zur Verstellung einer Drosselklappe in einer Ansaugleitung eines Verbrennungsmotors eines Kraftfahrzeugs verwenden.

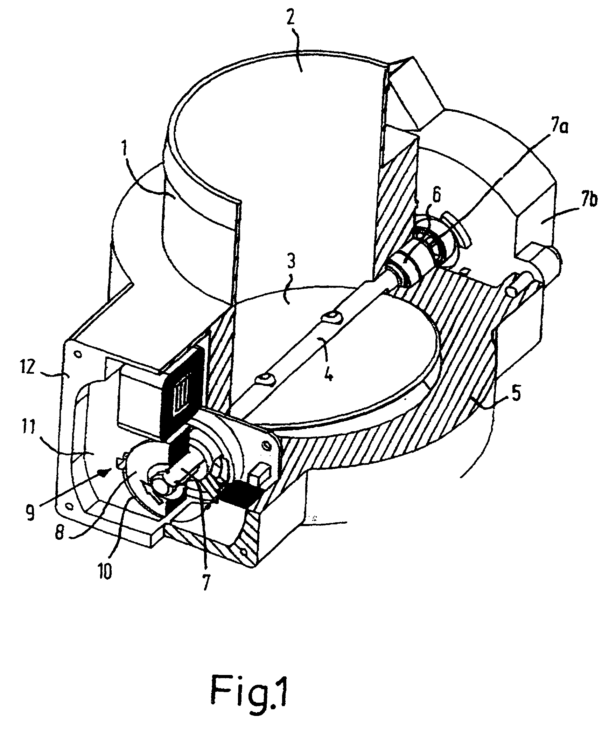

Einige schematisch dargestellte Ausführungsbeispiele der Erfindung werden nachfolgend anhand der Zeichnung in den Fig. 1 bis 3 näher erläutert. Es zeigen:
Fig. einen Ansaugstutzen eines Verbrennungsmotors mit einer in ihn eingesetzten Drosselklappe mit einer elektromotorischen Verstellvorrichtung zum Betätigen der Drosselklappe, schaubildlich und teilweise geschnitten,
Fig. 2 ein erstes Ausführungsbeispiel der elektromotorischen Verstellvorrichtung mit einem U-förmigen Stator, der aus drei Teilstücken aufgebaut ist, wobei der Luftspalt zwischen dem Stator und dem Rotor in Umfangsrichtung ungleichmäßig ausgebildet ist,
Fig. 3 eine zweites Ausführungsbeispiel der elektromotorischen Verstellvorrichtung mit einem Stator, der aus drei Teilstücken aufgebaut ist, wobei der Stator am Luftspalt Nuten aufweist, in die dauermagnetische Magnetkörper eingesetzt sind.

In Fig. 1 is ein Teil eines Ansaugstutzens 1 in der Ansaugleitung eines Verbrennungsmotors dargestellt. In dem Innenraum 2 des rohrförmigen Stutzens 1 ist eine Drosselklappe 3 angeordnet, welche an einer diametral durch den rohrförmigen Innenraum 2 geführten Klappenwelle 4 befestigt ist. Die Klappenwelle 4 ist in einem Flanschteil 5 des Stutzens 1 mittels Lagern 6 gelagert.

Die Klappenwelle 4 hat an einem Ende ein nach außen herausgeführtes Wellenende 7, auf dem ein zylinderförmiger magnetisierter Drehkörper 8 befestigt ist. Auf dem anderen Wellenende 7a befindet sich ein Positionssensor 7b.

Unter dem magnetisierten Drehkörper 8 soll ein drehbares Teil verstanden werden, das dauermagnetisch oder elektrisch magnetisierbar ist. Das Wellenende 7 mit dem magnetisierten Drehkörper 8 bilden zusammen den Rotor 9 einer elektromotorischen Verstellvorrichtung für die Drosselklappe 3. Der Rotor 9 ist mittels eines Luftspaltes 10 von einem elektrisch erregbaren, U-förmigen Stator 11 getrennt. Der U-förmige Stator 11 ist in einem Gehäuse 12 des Flanschteiles 5 angeordnet.

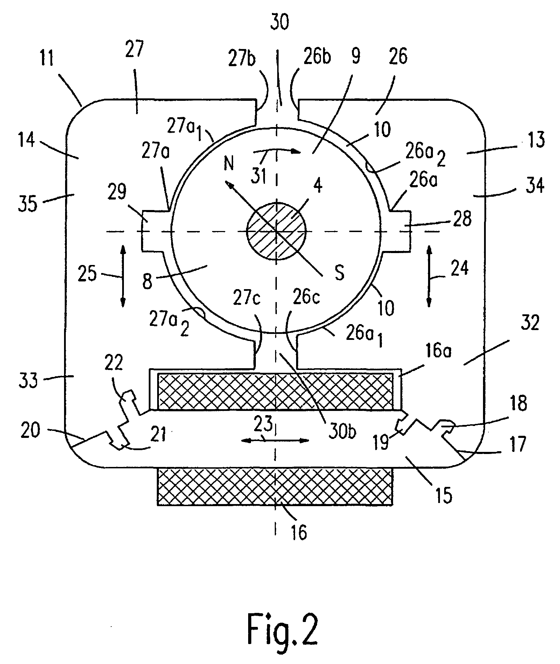

Fig. 2 zeigt den Stator 11 und den Rotor 9 der elektromotorischen Verstellvorrichtung für die Drosselklappe 3 im unerregten Zustand im Schnitt. Der dauermagnetisierte Drehkörper 8 ist zweipolig magnetisiert und weist dementsprechend einen Nordpol N und einen Südpol S auf. Der Stator 11 ist U-förmig ausgebildet und aus drei separaten Teilstücken zusammengesetzt. Der Stator 11 weist als zweites Teilstück einen ersten Schenkel 13 und als drittes Teilstück einen zweiten Schenkel 14 auf. Als erstes Teilstück ist ein Joch 15 vorgesehen, das den ersten Schenkel 13 und den zweiten Schenkel 14 miteinander verbindet. Um das Joch 15 ist eine Erregerwicklung 16 gewickelt. Der erste Schenkel 13 ist an einer ersten Trennfläche 17 mittels zweier Rastverbindungen 18, 19 mit dem Joch 15 zusammengefügt. Die Rastverbindungen 18,19 führen als Formschlußzentrierungen gleichzeitig eine Zentrierung des ersten Schenkels 13 mit dem Joch 15 durch Formschluß herbei. Der zweite Schenkel 14 ist an einer zweiten Trennfläche 20 mittels zweier Rastverbindungen 21 und 22 mit dem Joch 15 zusammengefügt. Die Rastverbindungen 21, 22 führen gleichzeitig eine Zentrierung des zweiten Schenkels 14 mit dem Joch 15 durch Formschluß herbei.

Der erste Schenkel 13, der zweite Schenkel 14 und das Joch 15 bestehen jeweils aus kornorientiertem, anisotropem Elektroblech. Die Anisotropierichtung des kornorientierten Elektroblechs des Joches 15 erstreckt sich horizontal in Richtung des Doppelpfeils 23 und ist damit auf die Richtung des magnetischen Flusses ausgerichtet, der von der Erregerwicklung 16 im Joch 15 erregt wird.

Die Anisotropierichtung des kornorientierten Elektrobleches des ersten Schenkels 13 und des zweiten Schenkels 14 erstreckt sich vertikal in der Haupterstreckungsrichtung des ersten Schenkels 13 bzw. des zweiten Schenkels 14 in Richtung der Doppelpfeile 24 bzw. 25. Der erste Schenkel 13 bildet einen ersten Polschuh 26 und der zweite Schenkel 14 einen zweiten Polschuh 27. Der erste Polschuh 26 begrenzt den Luftspalt 9 mit einem Polbogen 26a und der zweite Polschuh 27 mit einem Polbogen 27a. Der Polbogen 26a ist etwa in seiner Mitte durch eine Nut 28 unterbrochen, und der Polbogen 27a ist etwa in seiner Mitte durch eine Nut 29 unterbrochen. Diese Nuten 28 und 29 haben magnetisch etwa die gleiche Wirkung wie eine Öffnung 30a zwischen den Polschuhenden 26b bzw. 27b und eine Öffnung 30b zwischen den Polschuhenden 26c und 27c. Beiderseits der mittigen Nuten 28 bzw. 29 entstehen damit Teilpolbögen 26a₁ und 26a₂ bzw. 27a₁ und 27a₂. Der Luftspalt 10 hat unterschiedliche, nicht konstante Breiten. Zwischen den Teilpolbögen 26a₁ und 27a₁ und dem Rotor 9 ist er im Mittel geringer als zwischen den Teilpolbögen 26a₂ bzw. 27a₂ und dem Rotor 9.

Bei der Dimensionierung des Rotors 9 und des Stators 11 ist bedacht, daß die Vorrichtung ein großes Klebemoment haben soll. Im Ruhezustand, also bei stromloser Erregerwicklung 16 stellt sich der Rotor 9 entsprechend seiner Magnetisierung in den Bereichen der Teilpolbögen 26a₁ bzw. 27a₁ in die gewünschte Ruhestellung ein, die der Position des geringstens magnetischen Widerstandes entspricht und in der Fig 2 dargestellt ist. Wird die Erregerwicklung 16 erregt, dann verstellt sich der Rotor 9 entgegen den magnetischen Rückstellkräften im Uhrzeigersinn in einer Öffnungsrichtung 31. Das gegen dieses Verstellen entgegen der Öffnungsrichtung 31 wirkende Klebemoment ist ständig bestrebt, den Rotor 9 in die Ruhestellung rückzubewegen.

Das anisotrope Elektroblech, das für den ersten Schenkel 13, den zweiten Schenkel 14 und das Joch 15 verwendet wird, hat gegenüber isotropem Elektroblech den Vorteil, daß sich bei gleicher Feldstärke höhere magnetischen Flußdichten erzielen lassen. Dadurch läßt sich der Querschnitt des Blechpaketes an der betreffenden Stelle deutlich reduzieren, womit eine entsprechend Volumen- und Gewichtsreduzierung verbunden ist. Die elektromotorische Verstellvorrichtung gemäß Fig. 2 weist drei besonders kritische Stellen für die Flußführung auf:
a) Das Joch 15, da dieses sowohl den von dem magnetisierten Drehkörper 8 als auch den von der Erregerwicklung 16 erregten magnetischen Fluß führen muß.
b) Die Übergangsbereiche 32 bzw. 33 zwischen dem Joch 15 und dem ersten Schenkel 13 bzw. dem zweiten Schenkel 14 neben dem Wickelfenster 16a der Erregerwicklung 16. Der Fluß in diesen Übergangsbereichen 32 bzw. 33 ist im wesentlichen vertikal gerichtet in Richtung der Doppelpfeile 24 und 25.
c) Die mittleren Bereiche 34 bzw. 35 des ersten Schenkels 13 bzw. des zweiten Schenkels 14 hinter den Nuten 28 bzw. 29. Der magnetische Fluß in diesen Bereichen ist ebenfalls im wesentlichen vertikal in Richtung der Doppelpfeile 24 und 25 gerichtet.

Dagegen ist die Führung des magnetischen Flusses in horizontaler Richtung von den Schenkeln 13 und 14 zu dem Rotor 9 weitgehend unkritisch. Der Querschnitt in diesem Bereich wird im wesentlichen durch den Durchmesser des Rotors 9 bestimmt und ist in den meisten Fällen ausreichend.

Bei der elektromotorischen Verstellvorrichtung gemäß Fig. 2 stimmt die Anisotropierichtung des kornorientierten Elektroblechs, aus dem der erste Schenkel 13, der zweite Schenke 14 und das Joch 15 gefertigt sind, an den oben beschriebenen drei kritischen Stellen mit der Richtung des von dem magnetisierten Drehkörper 8 und der Erregerwicklung 16 erregten magnetischen Flusses im wesentlichen überein. Dadurch wird es möglich, die elektromagnetische Verstellvorrichtung sehr kompakt und mit geringem Gewicht zu realisieren. Der Aufbau des Stators 11 aus drei Teilstücken ist fertigungstechnisch leicht zu realisieren und hat zudem den Vorteil, daß die Erregerwicklung 16 als separate Komponente gewickelt wird und dann zusammen mit den drei Teilstücken des Stators 11 montiert werden kann.

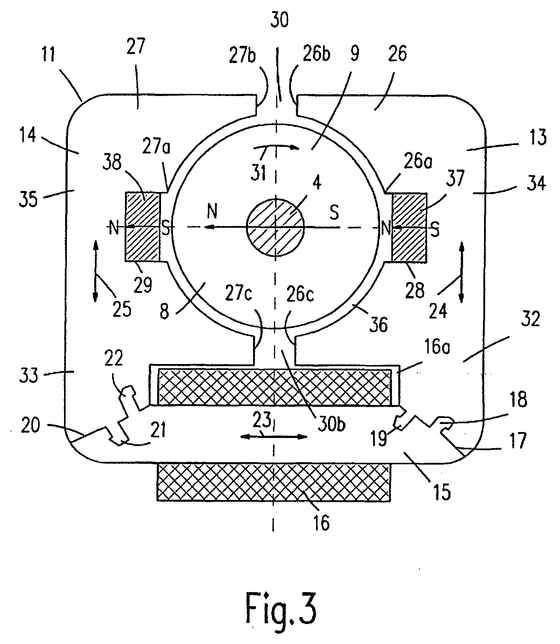

Fig. 3 zeigt ein zweites Ausführungsbeispiel der elektromotorischen Verstellvorrichtung im unerregten Zustand im Schnitt. Der Aufbau der Verstellvorrichtung dieses zweiten Ausführungsbeispiels entspricht in großen Teilen dem Aufbau gemäß Fig. 2, weshalb gleiche Teile mit gleichen Bezugsziffern versehen sind.

In dem zweiten Ausführungsbeispiel gemäß Fig. 3 sind in die Nuten 28 bzw. 29 des ersten Schenkels 13 bzw. des zweiten Schenkels 14 des Stators 11 dauermagnetische Magnetkörper 37 bzw. 38 eingesetzt. Die Magnetisierungsrichtung dieser Magnetkörper 37 und 38 ist diametral. Im Gegensatz zu dem Luftspalt 10 des Ausführungsbeispiels gemäß Fig. 2 ist der Luftspalt 36 des Ausführungsbeispiels gemäß Fig. 3 zwischen dem Rotor 9 und dem Stator 11 im Bereich der Polschuhe 26 bzw. 27 mit einer konstanten Breite ausgebildet.

Die dauermagnetischen Magnetkörper 37 und 38 bilden einen Rückstellmechanismus für den Rotor 9 und erzeugen einen Magnetfluß solcher Stärke und Richtung, daß der Rotor 9 bei unerregter Erregerwicklung 16 bestrebt ist, sich in Richtung des Magnetflusses der Magnetkörper 37 und 38 in die in der Fig. 3 dargestellte Rotorstellung auszurichten. Wird in dieser in der Fig. 3 dargestellten Rotorstellung die Erregerwicklung 16 erregt, so erzeugt die Verstellvorrichtung aufgrund der Symmetrie der Anordnung kein Drehmoment. Mittels eines nicht dargestellten mechanischen Anschlages kann verhindert werden, daß der Rotor 9 bei unerregter 'Erregerwicklung 16 die in der Fig. 3 gezeigte Stellung einnimmt. Der Anschlag kann beispielsweise so angeordnet werden, daß die Winkelstellung, die der Rotor 9 bei unerregter Erregerwicklung 16 einnimmt, um 5° gegenüber der in der Fig. 3 gezeigten Winkelstellung versetzt ist. Wird die Erregerwicklung 16 dann in dieser durch den nicht dargestellten Anschlag definierten, versetzten Position erregt, so wird von der Verstellvorrichtung ein Drehmoment erzeugt und der Rotor 9 verstellt sich entgegen den magnetischen Rückstellkräften im Uhrzeigersinn in einer Öffnungsrichtung 31. Das gegen dieses Verstellen entgegen der Öffnungsrichtung 31 wirkende Rückstellmoment ist ständig bestrebt, den Rotor 9 in die in der in Fig. 3 gezeigte Winkelstellung zurückzubewegen.

## Patentansprüche

1. Elektromotorische Verstellvorrichtung mit einem Rotor (9), der einen magnetisierten Drehkörper (8) aufweist, sowie mit einem U-förmigen Stator (11), dessen Schenkel (13, 14) die Polschuhe (26, 27) bilden und dessen Joch (15) die beiden Schenkel (13, 14) verbindet, wobei die Winkelstellung des Rotors (9) mittels des Statorstromes einstellbar ist, **dadurch gekennzeichnet,**
**daß** der U-förmige Stator (11) wenigstens drei Teilstücke aufweist,
**daß** das erste Teilstück im wesentlichen das Joch (15) des Stators (11) bildet, daß das zweite und das dritte Teilstück im wesentlichen die Schenkel (13, 14) des Stators (11) bilden und daß das erste Teilstück (15) aus anisotropem Material besteht, dessen Vorzugsrichtung im wesentlichen auf die Richtung des magnetischen Flusses im Joch (15) ausgerichtet ist.

2. Vorrichtung nach Anspruch 1, **dadurch gekennzeichnet, daß** das zweite und das dritte Teilstück (13, 14) jeweils aus isotropem Material bestehen.

3. Vorrichtung nach Anspruch 1, **dadurch gekennzeichnet, daß** das zweite und das dritte Teilstück (13, 14) jeweils aus anisotropem Material bestehen, dessen Vorzugsrichtung jeweils in Richtung der Haupterstreckungsrichtung der Schenkel (13, 14) gerichtet ist.

4. Vorrichtung nach einem der Ansprüche 1 bis 3, **dadurch gekennzeichnet, daß** die Polschuhe (26, 27) am Luftspalt (36) Nuten (28, 29) aufweisen, in die dauermagnetische Magnetkörper (34, 35) eingesetzt sind, die für den Rotor einen Rückstellmechanismus bilden.

5. Vorrichtung nach einem der Ansprüche 1 bis 4, **dadurch gekennzeichnet, daß** der Luftspalt (10) zwischen dem Rotor (9) und den Polschuhen (26, 27) des Stators (11) in Umfangsrichtung ungleichmäßig breit ausgebildet ist, so daß sich ein Klebemoment ergibt, das auf den Rotor ein Rückstellmoment ausübt.

6. Vorrichtung nach einem der Ansprüche 1 bis 5, **dadurch gekennzeichnet, daß** die Trennflächen (17, 20) zwischen dem ersten (15) und dem zweiten Teilstück (13) und dem ersten (15) und dem dritten (14) Teilstück jeweils als Schrägen gegenüber der Haupterstreckungsrichtung des Joches (15) mit einem Winkel zwischen 20° und 70° verlaufen.

7. Vorrichtung nach einem der Ansprüche 1 bis 6, **dadurch gekennzeichnet, daß** das anisotrope Material kornorientiertes Elektroblech ist.

8. Vorrichtung nach einem der Ansprüche 1 bis 7, **dadurch gekennzeichnet, daß** das erste (15) und das zweite Teilstück (13) und das erste (15) und das dritte (14) Teilstück mittels Formschlußzentrierungen aneinander gefügt sind.

9. Anordnung, aufweisend eine Drosselklappe (3), und eine zur Verstellung der Drosselklappe (3) vorgesehene Verstellvorrichtung nach einem der Ansprüche 1 bis 8.

10. Verbrennungsmotor mit einer elektromotorischen Verstellvorrichtung nach einem der Ansprüche 1 bis 8.

11. Kraftfahrzeug mit einer Vorrichtung nach einem der Ansprüche 1 bis 8.

## Claims

1. An electromotive adjustment device with a rotor (9) comprising a magnetized rotary body (8) and with a U-shaped stator (11) whose legs (13, 14) form the pole shoes (26, 27) and whose yoke (15) interconnects the two legs (13, 14), the angular position of the rotor (9) being adjustable by means of the stator current, **characterized in that** the U-shaped stator (11) comprises at least three parts, **in that** the first part essentially forms the yoke (15) of the stator (11), **in that** the second and the third part essentially form the legs (13, 14) of the stator (11), and **in that** the first part (15) is made from an anisotropic material whose preferred direction is substantially aligned with the direction of the magnetic flux in the yoke (15).

2. A device as claimed in claim 1, **characterized in that** the second and the third part (13, 14) are each made of an isotropic material.

3. A device as claimed in claim 1, **characterized in that** the second and the third part (13, 14) are each made of an anisotropic material whose preferred direction is the main longitudinal direction of the relevant leg (13, 14).

4. A device as claimed in any one of the claims 1 to 3, **characterized in that** the pole shoes (26, 27) comprise grooves (28, 29) in the air gap (36), in which grooves permanently magnetic bodies (34, 35) are inserted which form a reset mechanism for the rotor.

5. A device as claimed in any one of the claims 1 to 4, **characterized in that** the air gap (10) between the rotor (9) and the pole shoes (26, 27) of the stator (11) has an unevenly distributed width in circumferential direction, so that a detent torque is generated which acts as a reset torque for the rotor.

6. A device as claimed in any one of the claims 1 to 5, **characterized in that** the separation surfaces (17, 20) between the first (15) and the second part (13) and between the first (15) and the third part (14) are constructed as oblique surfaces in relation to the main longitudinal direction of the yoke (15), being at an angle of between 20° and 70° thereto.

7. A device as claimed in any one of the claims 1 to 6, **characterized in that** the anisotropic material is grain-oriented magnetic steel.

8. A device as claimed in any one of the claims 1 to 7, **characterized in that** the first (15) and the second part (13) and the first (15) and the third part (14) are joined together by means of respective interlocking, centering portions.

9. An arrangement comprising a throttle plate (3) and an adjustment device as claimed in any one of the claims 1 to 8 for the adjustment of the throttle plate (3).

10. An internal combustion engine comprising an electromotive adjustment device as claimed in any one of the claims 1 to 8.

11. A motor vehicle comprising a device as claimed in any one of the claims 1 to 8.

## Revendications

1. Dispositif d'ajustement à moteur électrique avec un rotor (9) qui présente un corps rotatif (8) magnétisé ainsi qu'avec un stator (11) en forme de U dont les côtés (13, 14) forment la pièce polaire (26,27) et dont la culasse (15) relie les deux côtés (13,14), la position angulaire du rotor (9) étant réglable à l'aide du courant du stator,
**caractérisé en ce que** le stator (11) en forme de U présente au moins trois pièces partielles, que la première pièce partielle forme essentiellement la culasse (15) du stator (11), que les deuxième et troisième pièces partielles forment essentiellement les côtés (13,14) du stator (11) et que la première pièce partielle (15) se compose d'un matériau anisotrope dont le sens préféré est essentiellement orienté sur la direction du flux magnétique dans la culasse (15).

2. Dispositif selon la revendication 1, **caractérisé en ce que** les deuxième et troisième pièces partielles (13, 14) se composent respectivement d'un matériau isotrope.

3. Dispositif selon la revendication 1, **caractérisé en ce que** les deuxième et troisième pièces partielles (13,14) se composent respectivement d'un matériau anisotrope dont le sens préféré est respectivement orienté dans le sens de l'extension principale des côtés (13, 14).

4. Dispositif selon l'une des revendications 1 à 3, **caractérisé en ce que** la pièce polaire (26) à l'entrefer (36) présente des rainures (28, 29) dans lesquelles sont insérés des corps magnétiques (34, 35) à aimantation permanente qui forment un mécanisme de rappel pour le rotor.

5. Dispositif selon l'une des revendications 1 à 4, **caractérisé en ce que** l'entrefer (10) entre le rotor (9) et les pièces polaires (26, 27) du stator (11) est conçu d'une largeur irrégulière en direction périphérique de telle sorte qu'il en résulte un couple d'adhérence qui exerce un couple de rappel sur le rotor.

6. Dispositif selon l'une des revendications 1 à 5, **caractérisé en ce que** les surfaces de séparation (17, 20) entre les première (15) et deuxième (13) pièces partielles et les première (15) et troisième (14) pièces partielles s'étendent respectivement comme des lignes obliques par rapport à l'extension principale de la culasse (15) en formant un angle situé entre 20 et 70°.

7. Dispositif selon l'une des revendications 1 à 6, **caractérisé en ce que** le matériau anisotrope est une tôle électrique à cristaux orientés.

8. Dispositif selon l'une des revendications 1 à 7, **caractérisé en ce que** les première (15) et deuxième pièces partielles (13) et les première (15) et troisième (14) sont jointes l'une à l'autre à l'aide de centrages mécaniques.

9. Dispositif présentant un papillon des gaz (3) et un dispositif d'ajustement prévu pour le réglage du papillon des gaz (3) selon l'une des revendications 1 à 8.

10. Moteur à combustion avec un dispositif d'ajustement à moteur électrique selon l'une des revendications 1 à 8.

11. Véhicule automobile avec un dispositif selon l'une des revendications 1 à 8.
